# EUROPÄISCHE PATENTSCHRIFT

(11) **EP 2 089 130 B1**
(45) Veröffentlichungstag und Bekanntmachung des Hinweises auf die Patenterteilung: **11.09.2019**
(21) Anmeldenummer: 07819126.9
(22) Anmeldetag: 18.10.2007
(51) Int. Cl.: B01D 3/00, B01D 3/14, B01D 3/36

(54) **ANLAGE ZUM DESTILLIEREN VON ALKOHOL, INSBESONDERE ETHYLALKOHOL AUS FERMENTIERTER MAISCHE**
INSTALLATION FOR THE DISTILLATION OF ALCOHOL, ESPECIALLY ETHYL ALCOHOL, FROM FERMENTED MASH
INSTALLATION POUR LA DISTILLATION D'ALCOOL, NOTAMMENT D'ÉTHANOL, À PARTIR DE MOÛT FERMENTÉ

(30) Priorität: 18.10.2006 DE 102006049173
(43) Veröffentlichungstag der Anmeldung: 19.08.2009
(73) Patentinhaber: GEA Wiegand GmbH, 76275 Ettlingen (DE)
(72) Erfinder: BETHGE, Daniel, 56850 Enkirch (DE); HILDENBRAND, Paul, 76571 Gaggenau (DE)
(74) Vertreter: Weickmann & Weickmann PartmbB
(86) Internationale Anmeldenummer: PCT/EP2007/009061
(87) Internationale Veröffentlichungsnummer: WO 2008/046634

(56) Entgegenhaltungen:
- EP-A- 1 080 766
- WO-A-88/02649
- US-A- 4 358 346
- US-A- 4 502 921
- US-A- 4 502 921
- US-A- 4 511 437

## Beschreibung

Die Erfindung betrifft eine Anlage zum Destillieren von Alkohol, insbesondere Ethylalkohol aus fermentierter Maische.

Neben Benzin und Dieselöl eignet sich auch Ethylalkohol als Kraftstoff für den Antrieb von Brennkraftmaschinen. Allerdings bedingt die herkömmliche Herstellung von Ethylalkohol aus nachwachsenden Agrarrohstoffen einen relativ hohen Energieverbrauch. In einer herkömmlichen Destillieranlage wird der Alkohol aus fermentierter, d.h. vergorener und damit Alkohol enthaltender Maische mittels einer Destillationskolonne, auch Maischekolonne genannt, ausgetrieben. Da die Alkoholkonzentration des in der Destillationskolonne ausgetriebenen Rohalkohols vergleichsweise niedrig ist, muss die Alkoholkonzentration in einer nachfolgenden Rektifikationskolonne und ggf. einem Dehydrierungsprozess auf einen seiner späteren Verwendung als Kraftstoff oder Industriealkohol genügenden Wert erhöht werden.

Der Energiebedarf der Destillieranlage wird zum größeren Teil durch den Energiebedarf der Rektifikationskolonne bestimmt, die üblicherweise durch Frischdampf beheizt wird. Die Destillationskolonne kann ihrerseits energiesparend durch Rückgewinnen der Wärmeenergie, beispielsweise des Kopfbrüdens der Rektifikationskolonne, beheizt werden.

Aus US 4,511,437 A ist eine Anlage zum Destillieren von Alkohol mit drei den Alkohol aus fermentierter Maische abziehenden Destillationskolonnen bekannt, die bezüglich des Alkoholproduktstroms zueinander parallel arbeiten und Rohalkohol gemeinsam an zwei wiederum alkoholproduktseitig parallel geschaltete Rektifikationskolonnen abgeben. Energetisch sind die Kolonnen in Reihe geschaltet, wobei der Kopfbrüden der einzelnen Kolonnen jeweils einen Reboiler einer im Druckniveau jeweils niedriger angeordneten Kolonne heizt.

Aus WO 88/02649 A1 ist eine Anlage zum Destillieren von Alkohol bekannt, die jeweils zwei aus einer Destillationskolonne und einer Rektifikationskolonne bestehende Kolonnenpaare umfasst. Die Destillationskolonne jedes Kolonnenpaars zieht aus vergorener, alkoholhaltiger Maische Rohalkohol ab und führt entstehenden, alkoholhaltigen Kopfbrüden dem Fußbereich der jeweils zugeordneten Rektifikationskolonne zu. Der Kopfbrüden der beiden Rektifikationskolonnen kondensiert in Kopfkondensatoren, wobei ein Teil des Kopfbrüdenkondensats der jeweiligen Rektifikationskolonne wiederum als kopfseitiger Rücklauf zugeführt wird. Ein Anteil des Kopfbrüdens der Rektifikationskolonne des ersten Kolonnenpaars heizt darüber hinaus einen Reboiler der Rektifikationskolonne des zweiten Kolonnenpaars. In einer Variante der aus WO 88/02649 A1 bekannten Destillieranlage ist zusätzlich zu den beiden Kolonnenpaaren ein Kondensatstripper vorgesehen, dem aus den Fußbereichen der beiden Rektifikationskolonnen wie auch aus dem Reboiler der Destillationskolonne des zweiten Kolonnenpaars Kondensat kopfseitig zugeführt wird.

Aus EP 1 080 766 A1 ist eine Destillieranlage bekannt, die es erlaubt, ein Mehrstoffsystem mit wenigstens drei Komponenten in seine Einzelkomponenten zu zerlegen. Die Anlage umfasst mehrere Destillationskolonnen, deren Teilbereiche unter Berücksichtigung unterschiedlicher Flüchtigkeit der Komponenten über Zwei-Wege-Verbindungen und/oder Ein-Weg-Verbindungen bezogen auf den Produktweg seriell miteinander verbunden sind. Das Mehrstoffprodukt wird auf diese Weise nacheinander in Teilprodukte mit verringerter Komponentenzahl und nachfolgend in Einzelkomponenten zerlegt.

Es ist Aufgabe der Erfindung, eine Destillieranlage für aus nachwachsenden Agrarrohstoffen hergestellten Alkohol, insbesondere Ethylalkohol anzugeben, die mit weniger Betriebsenergie als bisher auskommt.

Die Erfindung geht von einer Anlage zum Destillieren von Alkohol, insbesondere Ethylalkohol aus fermentierter Maische aus, die wenigstens eine aus der fermentierten Maische Rohalkohol abziehende Destillationskolonne und einer der Destillationskolonne nachgeschaltete, die Alkoholkonzentration erhöhende Rektifikationskolonne umfasst. Die erfindungsgemäße Verbesserung besteht darin, dass der wenigstens einen Destillationskolonne eine den Rohalkohol der Destillationskolonne aufkonzentrierende Verstärkungskolonne nachgeschaltet ist, deren Kopfbrüdenkondensat der Rektifikationskolonne als kopfseitiger Rücklauf zuführbar ist und aus deren Fußbereich Alkohol-Wasser-Gemisch der Rektifikationskolonne als aufzukonzentrierender Zulauf zuführbar ist, wobei der Kopfbrüden der Verstärkungskolonne zur Beheizung der Destillationskolonne genutzt wird, wobei der durch den Kopfbrüden beheizte Reboiler der Destillationskolonne zugleich den Kondensator der Verstärkungskolonne bildet,und wobei der Rektifikationskolonne eine Molekularsiebanordnung zur Dehydrierung des rektifizierten Alkohols nachgeschaltet ist.

Der Kopfbrüden der Verstärkerungskolonne besteht bereits aus rektifiziertem Alkohol. Auf Grund des Alkoholgehalts im Fußbereich der Verstärkungskolonne ist die Temperaturdifferenz zum Kolonnenkopf gering. Die Verstärkungskolonne lässt sich deshalb problemlos in den Wärmehaushalt der Destillieranlage integrieren, d.h. durch die Energie von Produktströmen anderer Stufen der Destillieranlage beheizen.

Herkömmlich wird Ethanol bis zum azeotropen Punkt, d.h. einer Konzentration von etwa 96 Vol% im Endprodukt rektifiziert. Es hat sich gezeigt, dass für die Nutzung als Kraftstoff oder Industriealkohol eine Rektifikation lediglich bis etwa 94 Vol% hinreichend ist, insbesondere wenn der solchermaßen aufkonzentrierte Ethylalkohol in einer nachfolgenden Stufe, insbesondere einer Molekularsiebanordnung dehydriert wird. Der Energiebedarf der Destillieranlage kann durch Begrenzen der Rektifikation auf eine Alkoholkonzentration von etwa 94 Vol% beträchtlich verringert werden, insbesondere wenn zugleich dafür gesorgt wird, dass die Destillationstemperatur der Destillationskolonne unter 85°C gehalten wird. Der Energiebedarf der Destillationskolonne wird auf diese Weise gleichfalls verringert und kann zu einem wesentlichen Teil aus dem Energieabfluss insbesondere der Rektifikationskolonne gedeckt werden. In einer bevorzugten Ausgestaltung ist deshalb vorgesehen, dass die Destillationskolonne den Rohalkohol bei einer Destillationstemperatur von weniger als 85°C abzieht und die Rektifikationskolonne die Alkoholkonzentration des Rohalkohols auf etwa 94 Vol% erhöht. Eine Destillationstemperatur von weniger als 85°C eignet sich
insbesondere für Maischerohstoffe mit einem relativ hohen Proteinanteil, wie dies zum Beispiel bei Roggen, Weizen, Gerste usw. der Fall ist. Sollten auf Grund der geringeren Aufkonzentrierung in der Rektifikationskolonne Nebenbestandteile in dem Alkohol-Endprodukt bleiben, so ist dies bei der vorgesehenen Verwendung für Kraftstoff oder Industriealkohol tolerabel.

Erfindungsgemäß ist der Rektifikationskolonne eine Molekularsiebanordnung zur Dehydrierung des rektifizierten Alkohols nachgeschaltet. Die Rektifikationskolonne wird hierbei zweckmäßigerweise mit Kopfüberdruck, beispielsweise von bis zu 3 bar betrieben, so dass der in der Rektifikationskolonne dampfförmig anfallende rektifizierte Alkohol der Molekularsiebanordnung bereits in Dampfform zugeführt werden kann. Der rektifizierte Alkohol kann der Molekularsiebanordnung ggf. über einen Überhitzer, beispielsweise einem mit Frischdampf beheizten Überhitzer zugeführt werden.

Der Wärmeinhalt des in der Molekularsiebanordnung dehydrierten Alkohols kann für die Verbesserung des Wärmehaushalts der Destillieranlage genutzt werden, wenn ein die Verstärkungskolonne beheizender Reboiler durch den dehydrierten Alkohol beheizt wird. Die Molekularsiebanordnung weist wenigstens zwei Molekularsiebe auf, die wechselweise in einem Trocknungsmodus, in welchem der rektifizierte Alkohol bei erhöhtem Druck dehydriert wird und einem Regenerationsmodus, in welchem das Molekularsieb bei erniedrigtem Druck mit dehydriertem Alkohol gespült wird, wobei dieser Anteil des dehydrierten Alkohols wieder befeuchtet wird. In einer bevorzugten Ausgestaltung ist vorgesehen, dass das im Trocknungsmodus betriebene Molekularsieb den dehydrierten Alkohol über den Reboiler der Verstärkungskolonne abgibt, während das andere, im Regenerationsmodus betriebene Molekularsieb einen Anteil des dehydrierten Alkohols aufnimmt und den hierbei befeuchteten Alkohol über einen den befeuchteten Alkohol kondensierenden Kondensator und einen mit Frischdampf beheizten Verdampfer, insbesondere Fallfilmverdampfer der Rektifikationskolonne als zu
rektifizierender Zulauf zuführt. Der im Regenerationsmodus befeuchtete, d.h. mit Wasser verdünnte Alkohol wird auf diese Weise erneut der Rektifikation zugeführt.

Der Energiebedarf des in der Molekularsiebanordnung dehydrierten Alkohols reicht in aller Regel nicht zur Beheizung der Verstärkungskolonne aus. In einer bevorzugten Ausgestaltung wird die Verstärkungskolonne durch einen weiteren Reboiler beheizt, der seinerseits durch Kopfbrüden der Rektifikationskolonne beheizt wird. Ein der Rektifikationskolonne zugeordneter Reboiler wird seinerseits durch Frischdampf beheizt, um den Energiebedarf der Rektifikationskolonne decken zu können. Der bzw. die Reboiler der Verstärkungskolonne oder/und der Reboiler der Rektifikationskolonne sind zweckmäßigerweise als in einem Zwangsumlaufkreis angeordnete Verdampfer ausgebildet. Bevorzugt werden hierzu Fallfilmverdampfer eingesetzt, da sich diese durch eine vergleichsweise niedrige Temperaturdifferenz zwischen Heiztemperatur und Verdampfungstemperatur auszeichnen. Der Zwangsumlaufkreis des Reboilers der Verstärkungskolonne ist hierbei durch deren Fußbereich geführt, wobei der Alkohol-Zufluss der Rektifikationskolonne aus diesem Zwangsumlaufkreis abgezweigt ist. Das Kondensat des Reboilers der Destillationskolonne oder/und des Reboilers der Verstärkungskolonne wird zweckmäßigerweise der Verstärkungskolonne oder/und der Rektifikationskolonne als Rückfluss zugeführt.

Der durch dehydrierten Alkohol beheizte Reboiler der Verstärkungskolonne kondensiert den dehydrierten Alkohol in aller Regel nicht vollständig. Der Wärmeinhalt des dehydrierten Alkohols kann zur Vorwärmung des kondensierten Alkohol-Wasser-Gemisches genutzt werden, wie es im Regenerationsmodus der Molekularsiebanordnung deren Kondensator verlässt.

Der Kopfbrüden der Verstärkungskolonne wird zur Beheizung der Destillationskolonne ausgenutzt. Der durch den Kopfbrüden beheizte Reboiler der Destillationskolonne bildet zugleich den Kondensator der Verstärkungskolonne, wobei das Kondensat des Kopfbrüdens der Verstärkungskolonne oder/und der Rektifikationskolonne als Rückfluss zuführbar ist. In entsprechender Weise kann auch das Kondensat des durch Kopfbrüden der Rektifikationskolonne beheizten Reboilers der Verstärkungskolonne dieser oder/und der Rektifikationskolonne als Rücklauf zugeführt werden.

Es ist bekannt, die Destillationskolonne über einen als Zwangsumlaufverdampfer ausgebildeten Reboiler zu beheizen. Nachteilig bei diesem bekannten Reboiler ist, dass die im Zwangsumlaufverdampfer im Kreislauf geführte Schlempe überhitzt werden muss, was die Integrierung des Reboilers in den Energiehaushalt der Destillieranlage erschwert, denn der zur Beheizung des Reboilers beispielsweise aus einer anderen Prozessstufe zugeführte Brüden muss sich auf einen vergleichsweise hohen Temperaturniveau befinden, um eine Entspannungsverdampfung in der Destillationskolonne zu ermöglichen. Wird hingegen ein Fallfilmverdampfer eingesetzt, so erfolgt die Verdampfung anders als bei bisherigen Zwangsumlaufverdampfern nicht in der Destillationskolonne, sondern direkt in dem Reboiler. Das Produkt muss nicht für die Entspannungsverdampfung in der Destillationskolonne überhitzt werden und dementsprechend genügt eine vergleichsweise geringe Temperaturdifferenz zwischen der Heizseite und der Produktseite des Fallfilmverdampfers.

In einer bevorzugten Ausgestaltung der Erfindung ist vorgesehen, dass in der Destillationskolonne anfallende Schlempe einer die Schlempe in eine Feststofffraktion und eine Dünnsaftfraktion trennenden Trennvorrichtung zuführbar ist, dass der Destillationskolonne zu deren Beheizung ein als Fallfilmverdampfer ausgebildeter, durch Kopfbrüden einer im Produktstrom nachfolgenden, die Alkoholkonzentration erhöhenden Kolonne oder durch Frischdampf beheizter Reboiler zugeordnet ist und zumindest ein Teil der Dünnsaftfraktion in einen Zwangsumlaufkreis durch den Fallfilmverdampfer geführt ist und
dass zumindest ein Teil der in den Zwangsumlaufkreis umlaufenden Dünnsaftfraktion oder Brüden hiervon der Destillationskolonne zu deren Beheizung zuführbar ist. Der als Reboiler der Destillationskolonne benutzte Fallfilmverdampfer kann problemlos in den Energiehaushalt der Destillieranlage integriert werden. Da die Feststofffraktion der Schlempe in der beispielsweise als Dekanter ausgebildeten Trennvorrichtung abgetrennt wird und lediglich die Dünnsaftfraktion durch den Zwangsumlaufkreis zirkuliert, wird die Verschmutzung des an sich verschmutzungsempfindlichen Fallfilmverdampfers weitgehend vermieden. Die abgetrennte Feststofffraktion wird aus dem Prozess entfernt. Zweckmäßigerweise wird der in dem Fallfilmverdampfer erzeugte Brüden direkt in die Destillationskolonne zur Beheizung eingespeist.

In einer bevorzugten Ausgestaltung wird der den Reboiler der Destillationskolonne bildende Fallfilmverdampfer durch die im Alkoholproduktstrom zwischen der Destillationskolonne und der Rektifikationskolonne angeordneten, die Alkoholkonzentration des Rohalkohols erhöhenden Verstärkungskolonne beheizt. Zwar wird hierdurch ein Teil der zur Beheizung der Verstärkungskolonne aufgewandten Energie rückgewonnen, doch reicht diese Energie unter Umständen für die vollständige Beheizung der Destillationskolonne nicht aus, nachdem die Verstärkungskolonne verglichen mit einer herkömmlichen Rektifikationskolonne auf einem niedrigeren Energieniveau betrieben wird. Im Einzelfall muss deshalb der Energiebedarf der Destillationskolonne anderweitig ergänzt werden.

Für die Ergänzung des Energiebedarfs der Destillationskolonne kann in an sich bekannter Weise ein Zwangsumlaufverdampfer vorgesehen sein, der durch Kopfbrüden der Destillationskolonne beheizt wird. Da der Druck und die Temperatur des Kopfbrüdens der Destillationskolonne für den Betrieb des Zwangsumlaufverdampfers nicht ausreicht, ist es bekannt, den Druck und die Temperatur des Kopfbrüdens mittels eines Verdichters zu erhöhen. Da der Verdichter alkoholhaltigen Brüden verdichtet, muss der Verdichter explosionsgeschützt ausgeführt sein, was den konstruktiven Aufwand beträchtlich erhöht.

In einer bevorzugten Ausgestaltung ist vorgesehen, dass der Rohalkoholbrüden der Destillationskolonne in einem zur Erzeugung von Wasserdampf genutzten Verdampfer zumindest zu einem Teil kondensierbar ist und der Wasserdampf über einen den Druck oder/und die Temperatur des Wasserdampfs erhöhenden mechanischen Verdichter der Destillationskolonne oder einer weiteren, aus der fermentierten Maische als Rohalkohol abziehenden Destillationskolonne zu deren Beheizung zuführbar ist.

Der Verdichter komprimiert damit alkoholfreien Wasserdampf und muss damit nicht explosionsgeschützt ausgeführt sein. Da es sich um einen mechanischen Verdichter handelt, kann er elektrisch angetrieben werden, was sich relativ einfach und kostengünstig realisieren lässt. Der Energiebedarf der Destillationskolonne kann auf diese Weise ergänzt werden, ohne das der Energieinhalt des Kopfbrüdens der Verstärkungskolonne oder einer sonstigen Stufe der Destillieranlage lediglich unter dem Gesichtspunkt der Beheizung der Destillationskolonne erhöht werden müsste.

Der mittels des mechanischen Verdichters verdichtete Wasserdampf kann der bereits mittels des Reboilers teilbeheizten Destillationskolonne zusätzlich zugeführt werden. Bei einer mehrstufigen, z.B. zweistufigen Destillationskolonne kann eine erste Destillationskolonne mittels des durch Kopfbrüden einer nachfolgenden, die Alkoholkonzentration erhöhenden Kolonne, beispielsweise der Verstärkungskolonne oder Rektifikationskolonne beheizt werden, während die zweite Destillationskolonne durch den verdichteten Wasserdampf des mechanischen Verdichters beheizt wird. Den beiden Destillationskolonnen wird die Maische parallel zugeführt, wobei jedoch die zweite Destillationskolonne bevorzugt bei einer tieferen Kopftemperatur und niedrigerem Druck betrieben wird als die erste Destillationskolonne.

Bevorzugt handelt es sich bei dem den Wasserdampf erzeugenden Verdampfer um einen Fallfilmverdampfer, um auch hier die im Fall des Fallfilmverdampfers niedrige Temperaturdifferenz zwischen Heiztemperatur und Verdampfungstemperatur energetisch nutzen zu können. Der Fallfilmverdampfer ist zweckmäßigerweise für die Erzeugung des Wasserdampfs in einem Zirkulationskreis für Frischwasser oder Schlempe oder Schlempebrüden angeordnet. Die Erzeugung des Wasserdampfs aus Schlempe oder Schlempebrüden hat den Vorteil, dass der Wasserdampf hinreichende Temperatur hat, da die Schlempe aus dem beheizten Fußbereich der Destillationskolonne abgezogen wird. Wird Frischwasser genutzt, so muss dieses vorgewärmt werden. Allerdings wird bei Nutzung von Frischwasser vermieden, dass sich in der Schlempe enthaltene Komponenten durch Crackreaktionen in leichtflüchtige Stoffe verwandeln, die in den Rohalkohol gelangen können. Die Nutzung von Frischwasser minimiert Denaturierungsreaktionen und Ablagerungen in dem Fallfilmverdampfer. Der mechanische Verdichter ist dennoch bevorzugt über einen den Wasserdampf abtrennenden Abscheider, insbesondere einem Entspannungsabscheider an den Zirkulationskreis angeschlossen.

Der mechanische Verdichter kann als Kompressor aufgebaut sein oder als Schaufelradverdichter. Es versteht sich, dass der Verdichter auch mehrere seriell verbundene mechanische Verdichterstufen umfassen kann.

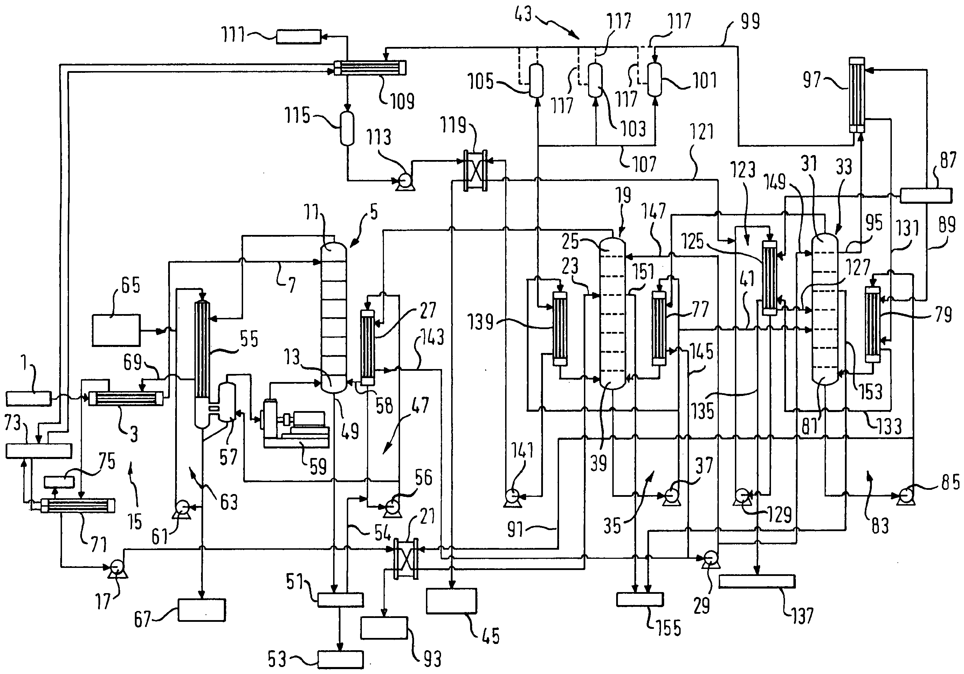

Im Folgenden wird die Erfindung anhand einer Zeichnung näher erläutert. Die Figur der Zeichnung zeigt ein schematisches Schaltbild einer Ethylalkohol aus fermentierter Maische erzeugenden Destillieranlage.

Der für die Erzeugung von Ethylalkohol als Kraftstoff für Brennkraftmaschinen oder für Industriezwecke geeigneten Destillieranlage wird aus einer Vorstufe 1 des Alkoholherstellungsprozesses fermentierte, d.h. vergorene und damit ethylalkoholhaltige Maische eines nachwachsenden Agrarrohstoffs mit relativ hohem Proteinanteil, wie z.B. Roggen, Weizen, Gerste usw. zugeführt. Die Maische wird in einem Vorwärmer 3 auf die Destillationstemperatur einer Destillationskolonne 5 erwärmt und der Destillationskolonne 5 über eine Leitung 7 zugeführt. Der Kopfbereich, der vielfach auch als Maischekolonne bezeichneten Destillationskolonne 5 ist bei 11 angedeutet, ihr Fußbereich bei 13.

Die aus dem Kopfbereich 11 der Destillationskolonne 5 als Alkoholbrüden abgezogene Rohalkohol wird in einer hier mehrstufigen und zugleich der Energierückgewinnung der in dem Rohalkohol enthaltenen Wärmeenergie genutzten Kondensatoranordnung 15 kondensiert und in flüssiger Form mittels einer Förderpumpe 17 über einen den Rohalkohol auf die Rektifikationstemperatur einer Verstärkungskolonne 19 erwärmenden Vorwärmer 21 bei 23 als Zulauf zugeführt. Die Verstärkungskolonne 19 erhöht den Alkoholgehalt des Rohalkohols der Destillationskolonne im Kopf bereits auf etwa 94 Vol%; das verbleibende Ethanol im Sumpf wird in der Rektifikationskolonne 33 vom Lutterwasser getrennt.

Der aus dem Kopfbereich 25 der Verstärkungskolonne 19 abgezogene, rektifizierte Alkoholbrüden wird, wie nachfolgend noch näher erläutert wird, in einem die Destillationskolonne 5 beheizenden, als Kopfkondensator der Verstärkungskolonne 19 ausgenutzten Reboiler 27 kondensiert und mittels einer Förderpumpe 29 sowohl dem Kopfbereich 25 der Verstärkungskolonne 19 als auch dem Kopfbereich 31 einer der Verstärkungskolonne 19 nachgeschalteten Rektifikationskolonne 33 als Rücklauf zugeführt. Als Zulauf der Rektifikationskolonne 33 dient Ethanol-Wasser-Gemisch, das über einen Zwangsumlaufkreis 35 mittels einer Förderpumpe 37 aus dem Fußbereich 39 der Verstärkungskolonne 19 abgezogen und über eine Leitung 41 der Rektifikationskolonne 33 zugeführt wird.

Der in der Rektifikationskolonne 33 weiter aufkonzentrierte Ethylalkohol wird in einer Molekularsiebanordnung 43 dehydriert und steht als rektifizierter und dehydrierter Ethylalkohol bei 45 als Endprodukt zur Verfügung.

Der Energiebedarf der Destillieranlage wird in erster Linie durch den Energiebedarf der Aufkonzentrierung und weniger durch das Abziehen des Rohalkohols aus der Maische bestimmt. Die Rektifizierung erfolgt in zwei Stufen, d.h. in der Verstärkungskolonne 19 und der Rektifikationskolonne 33. Da der Rückfluss der Rektifikationskolonne 33 dem Kopfprodukt der Verstärkungskolonne 19 und der Zufluss der Rektifikationskolonne 33 dem Fußbereich 39 der Verstärkungskolonne 19 entnommen wird, ist die Temperaturdifferenz des Fußbereichs 39 zum Kopfbereich 25 der Verstärkungskolonne 19 vergleichsweise gering, so dass sich die Verstärkungskolonne 19 selbst dann gut in den Wärmehaushalt der Destillieranlage integrieren lässt, wenn die Rektifikationskolonne 33 lediglich bei einer Kopftemperatur zwischen 85 und 110°C betrieben wird. Wesentlich für die Verringerung des Energiebedarfs der Destillieranlage ist, dass die Rektifikationskolonne 33 den Alkohol lediglich auf etwa 94 Vol% aufkonzentriert, bevor der rektifizierte Alkohol der Molekularsiebanordnung 43 zur Dehydrierung zugeführt wird. Zugleich wird die Destillationstemperatur der Destillationskolonne 5 auf eine Temperatur von weniger als 85°C begrenzt, so dass der Destillierprozess auf einem niedrigeren Energieniveau als bisher durchgeführt wird.

Der durch Kopfbrüden der Verstärkungskolonne 19 beheizte und den Kopfbrüden kondensierende Reboiler 27 ist als Fallfilmverdampfer ausgebildet und beheizt den Fußbereich 13 der Destillationskolonne 5. Die in der Destillationskolonne 5 anfallende, alkoholfreie Schlempe wird über einen Fußbereichsauslass 49 einem Dekanter 51 zugeführt, der die Schlempe in eine bei 53 aus dem Prozess entfernte Feststofffraktion und eine über eine Leitung 54 stromabwärts des Reboilers 27 jedoch vor einer Förderpumpe 56 in den Zwangsumlaufkreis 47 eingeleitete Dünnsaftfraktion aufteilt. In den Zwangsumlaufkreis 47 zirkuliert damit anders als bei herkömmlichen Reboilern auf der Basis eines Zwangsumlaufverdampfers nicht Schlempe, sondern deren von Feststoffen weitestgehend befreite Dünnsaftfraktion. Ein Teil der in dem Fallfilmverdampfer 27 erwärmten Dünnsaftfraktion der Schlempe oder daraus gewonnener Brüden wird bei 58 direkt in den Fußbereich 13 der Destillationskolonne 5 zu deren Beheizung zurückgeführt. Der Vorteil des Fallfilmverdampfers 27, dass die Temperatur des an seinem den Kopfbrüden der Verstärkungskolonne 19 aufnehmenden Anschluss zugeführten Kopfbrüdens nur wenig größer, beispielsweise 5°C höher als die Siedetemperatur des zu verdampfenden Produkts, hier der Dünnsaftfraktion, sein muss, erleichtert die Einbindung der Anlage in die Energiebilanz der Destillieranlage. Die zum Beheizen der Destillationskolonne 5 erforderliche Energiemenge kann damit auf einem niedrigeren Temperaturniveau als bisher bereitgestellt werden.

Bei dem dargestellten Ausführungsbeispiel wird die Schlempe an einer zuunterst im Fußbereich 13 liegenden Stelle abgezogen. Es versteht sich, dass die Schlempe auch an einer darüber liegenden Stelle, beispielsweise im Bereich des untersten Bodens der Destillationskolonne 5 abgezogen werden kann, so dass der die Dünnsaftfraktion führende Zwangsumlaufkreis 47 ggf. auch direkt durch den Fußbereich 13 verlaufen kann.

Die den Rohalkoholbrüden aus dem Kopfbereich 11 der Destillationskolonne 5 kondensierende Kondensatoranordnung 15 umfasst als erste Stufe einen Fallfilmverdampfer 55 zur Erzeugung von Niederdruck-Wasserdampf, der über einen Entspannungs-Schwerkraftabscheider 57 an einen mechanischen Verdichter 59 abgegeben wird. Der mechanische Verdichter 59 erhöht den Druck und die Temperatur des Wasserdampfs und bläst den verdichteten Wasserdampf unmittelbar in den Fußbereich 13 zur zusätzlichen Beheizung der Destillationskolonne 5 ein. Auf diese Weise wird ein Teil der Kondensationswärme des Rohalkohol-Kopfbrüdens der Destillationskolonne 5 für die Beheizung der Destillationskolonne zurückgewonnen. Da der mechanische Verdichter 59 anders als bei herkömmlichen Brüdenverdichtern nicht Alkoholbrüden verdichtet, sondern Wasserdampf, muss der Verdichter 59 nicht explosionsgeschützt ausgeführt sein.

Der Fallfilmverdampfer 55 ist in einer mit einer Pumpe 61 versehenen Zwangsumlaufkreis 63 angeordnet, und verdampft in dem Zwangsumlaufkreis zirkulierendes Frischwasser, das bei 65 aus einer nicht dargestellten Quelle in vorgewärmter Form zugeführt wird. Aus dem Zwangsumlaufkreis 47 stromab der Pumpe 56 ablaufende Dünnsaftfraktion bzw. Dünnschlempe wird über den Abscheider 57 dem Zwangsumlaufkreis 63 des Fallfilmverdampfers 55 ergänzend zur Frischwasserzufuhr zugeführt und verlässt den Zwangsumlaufkreis 63 und damit den Prozess bei 67.

Der Niederdruck-Wasserdampf hat eingangsseitig des Verdichters 59 einen Druck von beispielsweise etwa 200 bis 250 mbar und wird von dem Verdichter 59 auf einen Ausgangsdruck zwischen 500 und 600 mbar bei einer Temperatur zwischen 70 und 90°C angehoben. Der mechanische Verdichter kann als einstufiger oder auch als mehrstufiger Verdichter ausgebildet sein. Geeignet sind rotierende Kompressoren, aber auch Schaufelradverdichter bzw. Ventillatoren. Da der Verdichter 59 elektromotorisch angetrieben wird, lässt sich die Antriebsenergie einfacher zur Verfügung stellen, als dies beispielsweise bei einem Dampfstrahlverdichter möglich ist.

Die Destillationskolonne 5 arbeitet zweckmäßigerweise bei einer Kopftemperatur zwischen 55 und 75°C und einem Kopfdruck zwischen 300 und 500 mbar. Im Prinzip könnte anstelle des Fallfilmverdampfers 55 auch ein anderer Verdampfertyp eingesetzt werden. Vorteil des Fallfilmverdampfers ist jedoch seine geringe Temperaturdifferenz von beispielsweise 5°C zwischen der Eingangstemperatur des zumindest teilweise zu kondensierenden Rohalkoholbrüdens der Destillationskolonne 5 und der Ausgangstemperatur des Niederdruck-Wasserdampfs. Die Verdichterleistung des Verdichters 59 kann auf dieser Weise verringert werden.

Nicht näher dargestellt ist eine Variante, bei welcher der in vorstehend erläuterter Weise von dem Fallfilmverdampfer 55 mit der Kondensationswärme der Destillationskolonne 5 erzeugte und durch den Verdichter 59 verdichtete Wasserdampf nicht der Destillationskolonne 5 zur Beheizung zugeführt wird, sondern einer weiteren Destillationskolonne, deren Rohalkoholbrüden dann den Vorwärmer 3 betreibt. Da diese weitere Destillationskolonne bei einer niedrigeren Destillationstemperatur betrieben wird als die Destillationskolonne 5, kann die für den Betrieb des mechanischen Verdichters 59 aufzuwendende elektrische Energie weiter verringert werden. Die beiden Destillationskolonnen werden, was die Zuführung der Maische anbelangt, parallel und was den Energiehaushalt anbelangt, in Serie betrieben.

Im dargestellten Ausführungsbeispiel wird dem Zwangsumlaufkreis 63 Frischwasser zugeführt, was die Gefahr von Denaturierungsreaktionen und Nebenkomponentenbildung mindert. Es versteht sich, dass in den Zwangsumlaufkreis 63 auch ausschließlich mit Dünnsaftfraktion bzw. Dünnschlempe gearbeitet werden kann.

Da der Rohalkohol-Kopfbrüden der Destillationskolonne 5 in dem Fallfilmverdampfer 55 nicht vollständig kondensiert, wird der nicht kondensierte Brüdenanteil bei 69 dem die zweite Stufe der Kondensationsanordnung 15 bildenden Vorwärmer 3 für die Vorwärmung der Maische zugeführt. Der Ausgangsbrüden des Vorwärmers 3 wird schließlich einem Hauptkondensator 71 zugeführt, der die dritte Stufe der Kondensationsanordnung 15 bildet und den Rohalkohol als flüssiges Kondensat über die Förderpumpe 17 zur Weiterleitung an die Verstärkungskolonne 19 abgibt. Der Hauptkondensator 71 ist an eine Kühlwasserquelle 73 angeschlossen und ist überdies mit einer Vakuumpumpe 75 verbunden, über die der Unterdruck in der Destillieranlage eingestellt wird.

Im dargestellten Ausführungsbeispiel wird die Maische der Destillationskolonne 5 nahe ihres Kopfbereichs 11 zugeführt, also auf einen von der Verstärkungskolonne 19 gesonderten Verstärkungsbereich verzichtet. Dementsprechend hat der den Hauptkondensator 71 verlassende Rohalkohol eine Konzentration von lediglich 40 bis 60 Vol%. Der Energiebedarf der Destillationskolonne 5 ist damit vergleichsweise gering. Die Aufkonzentration des Rohalkohols erfolgt in der Verstärkungskolonne 19 und nachfolgend der Rektifikationskolonne 33. Da die Rektifikation auf zwei Stufen verteilt ist, kann auch hier energetisch günstig gearbeitet werden. Es versteht sich jedoch, dass auch die Destillationskolonne 5 in gewissem Umfang zusätzliche Böden zur Aufkonzentration umfassen kann.

Die Verstärkungskolonne 19 wird in erster Linie durch einen als Fallfilmverdampfer ausgebildeten Reboiler 77 beheizt, der zugleich den Kopfkondensator der Rektifikationskolonne 33 bildet. Der Reboiler 77 ist an den durch den Fußbereich 39 der Verstärkungskolonne 19 führenden Zwangsumlaufkreis 35 angeschlossen.

Die Rektifikationskolonne 33 wird in ähnlicher Weise in erster Linie über einen als Fallfilmverdampfer ausgebildeten Reboiler 79 beheizt, der an einen durch den Fußbereich 81 der Rektifikationskolonne 33 geführten Zwangsumlaufkreis 83 angeschlossen ist. Eine Förderpumpe des Zwangsumlaufkreises 83 ist bei 85 dargestellt. Beheizt wird der Reboiler 79 durch Frischdampf, der ihm aus einer Frischdampfquelle 87 über eine Leitung 89 zugeführt wird. In dem Zwangsumlaufkreis 83 zirkulierendes Lutterwasser aus dem Fußbereich 81 wird stromab der Pumpe 85 über eine Leitung 91 abgezogen und, nachdem es in dem Vorwärmer 21 zur Vorerwärmung des der Verstärkungskolonne 19 zugeführten, flüssigen Rohalkohols ausgenutzt wurde, bei 93 aus dem Prozess entfernt.

Während die Verstärkungskolonne 19 etwa 30 Böden hat, umfasst die Rektifikationskolonne 33 etwa 50 Böden und liefert den rektifizierten Alkohol bei einem Druck von etwa 1,5 bis 6 bar, beispielsweise 2 bar, an einem Seitenabzug 95 in Dampfform bei einer Alkoholkonzentration von etwa 94 Vol%. Der dampfförmige, rektifizierte Alkohol wird einem gleichfalls aus der Frischdampfquelle 87 beheizten Überhitzer 97 zugeführt, der den überhitzten Alkoholdampf bei 99 der Molekularsiebanordnung 43 zur Dehydrierung zuführt.

Die Molekularsiebanordnung 43 weist in an sich bekannter Weise mehrere Molekularsiebe, hier drei Molekularsiebe 101, 103 und 105 auf, die in zyklischer Vertauschung jeweils in einem Trocknungsmodus und einem Regenerationsmodus betrieben werden. Im dargestellten Ausführungsbeispiel arbeitet jeweils ein Molekularsieb, hier das Molekularsieb 101 im Trocknungsmodus, während die beiden anderen Molekularsiebe 103, 105 in ihren Regenerationsmodus geschaltet sind.

Im Trocknungsmodus wird der dampfförmige, überhitzte Alkohol unter erhöhtem Druck dem aktuell im Trocknungsmodus arbeitenden Molekularsieb, hier dem Molekularsieb 101 zugeführt, das den dehydrierten Alkohol an eine Sammelleitung 107 abgibt, an die die Molekularsiebe 101, 103, 105 mit ihren Ausgängen für dehydrierten Alkohol gemeinsam angeschlossen sind.

Die aktuell im Regenerationsmodus betriebenen Molekularsiebe 103, 105 sind für den Betrieb im Regenerationsmodus über einen Kondensator 109 an eine Vakuumquelle 111 angeschlossen, die den Molekularsieben 103, 105 über die Sammelleitung 107 zugeführten dehydrierten Alkohol in Rückwärtsrichtung durch die zu regenerierenden Molekularsiebe 103, 105 und durch den Kondensator 109 saugt. Der Kondensator 109 wird aus der Kühlwasserquelle 73 mit Kühlwasser versorgt und kondensiert das bei der Regeneration in den Molekularsieben 103, 105 sich erneut befeuchtende Alkohol-Wasserdampf-Gemisch. Eine Pumpe 113 fördert das in einem Sammelbehälter 115 sich sammelnde Alkohol-Wasser-Gemisch in dem Prozess zurück.

Es versteht sich, dass die Anzahl der Molekularsiebe von dem dargestellten Ausführungsbeispiel abweichen kann. Für einen kontinuierlichen Betrieb sind mindestens zwei Molekularsiebe erforderlich, die wechselweise im Trocknungsmodus und Regenerierungsmodus arbeiten. Da der Regenerierungsmodus länger dauern kann als die für die Dehydrierung nutzbare Trocknungszyklusdauer, ist die Anzahl der im Regenerierungsmodus betriebenen Molekularsiebe zweckmäßigerweise größer als die Zahl der im Trocknungsmodus betriebenen Molekularsiebe. Die für die zyklische Vertauschung und Umschaltung der Molekularsiebe erforderlichen steuerbaren Verbindungsleitungen sind bei 117 angedeutet.

Das im Regenerationsmodus anfallende Alkohol-Wasser-Gemisch wird erneut der Rektifikation zugeführt. Da das Gemisch bei der Kondensation im Kondensator 109 auf eine Temperatur von etwa 40°C abgekühlt wurde, wird es in einem Vorwärmer 119 vorgewärmt und über eine Leitung 121 einem Zwangsumlaufkreis 123 eines hier als Fallfilmverdampfer ausgebildeten Verdampfers 125 zugeführt. Der Verdampfer 125 wird gleichfalls mit Frischdampf aus der Frischdampfquelle 87 beheizt und gibt das auf Rektifikationstemperatur erwärmte Gemisch bei 127 als Zulauf an die Rektifikationskolonne 33 ab. Eine Förderpumpe des Zwangsumlaufkreises 123 ist bei 129 dargestellt.

In dem durch Frischdampf aus der Frischdampfquelle 87 beheizten Überhitzer 97 bzw. dem Fallfilmverdampfer 79 sowie dem Verdampfer 125 anfallendes Heizdampfkondensat wird über Leitungen 131, 133 und 135 bei 137 aus dem Prozess abgezogen.

Der in der Molekularsiebanordnung 43 dehydrierte Alkohol heizt einen weiteren, als Fallfilmverdampfer ausgebildeten Reboiler 139 der Verstärkungskolonne 19, der parallel zu dem Reboiler 77 an den Zwangsumlaufkreis 35 angeschlossen ist. Der dehydrierte Alkohol wird dem Reboiler 139 aus der Sammelleitung 107 zugeführt und über eine Förderpumpe 141 dem Vorwärmer 119 zur Vorerwärmung des im Regenerationsmodus der Molekularsiebanordnung 43 anfallenden Alkohol-Wasser-Gemisches zugeführt wird, um letztendlich bei 45 als Endprodukt abgezogen zu werden.

Der Reboiler 27 der Destillationskolonne 5 bildet zugleich den Kopfkondensator der Verstärkungskolonne 19, während der Reboiler 77 der Verstärkungskolonne 19 zugleich den Kopfkondensator der Rektifikationskolonne 33 bildet. Das in den Reboilern 27 und 77 bei 143 bzw. 145 anfallende Alkoholkondensat wird, gefördert von der Förderpumpe 29 bei 147 der Verstärkungskolonne und bei 149 der Rektifikationskolonne im Kopfbereich als Rückfluss zugeführt. Im Rektifikationsprozess anfallendes Fuselöl wird bei 151 aus der Verstärkungskolonne und bei 153 aus der Rektifikationskolonne abgezogen und bei 155 aus dem Prozess entfernt.

Die vorstehend erläuterte Destillieranlage erlaubt es in einem Niedertemperaturverfahren Ethylalkohol aus Weizen, Roggen usw. zu destillieren. Während herkömmliche Anlagen etwa 2 kg Heizdampf pro Liter reinen Alkohols, entsprechend etwa 4000 kJ pro Liter reinen Alkohols benötigen, erfordert die erfindungsgemäße Destillieranlage lediglich etwa 2300 kJ pro Liter reinen Alkohols zuzüglich etwa 54 W pro Liter reinen Alkohols an elektrischer Energie für die Brüdenverdichtung.

## Patentansprüche

1. Anlage zum Destillieren von Alkohol, insbesondere Ethylalkohol aus fermentierter Maische, umfassend
wenigstens eine aus der fermentierten Maische Rohalkohol abziehende Destillationskolonne (5) mit einem Reboiler (27) und eine der Destillationskolonne (5) nachgeschaltete, die Alkoholkonzentration erhöhende Rektifikationskolonne (33),
wobei
der wenigstens einen Destillationskolonne (5) eine den Rohalkohol der Destillationskolonne aufkonzentrierende Verstärkungskolonne (19) nachgeschaltet ist, deren Kopfbrüdenkondensat der Rektifikationskolonne (33) als kopfseitiger Rücklauf zuführbar ist und aus deren Fußbereich (39) Alkohol-Wasser-Gemisch der Rektifikationskolonne (33) als aufzukonzentrierender Zulauf zuführbar ist,
wobei der Kopfbrüden der Verstärkungskolonne (19) zur Beheizung der Destillationskolonne (5) genutzt wird, wobei der durch den Kopfbrüden beheizte Reboiler (27) der Destillationskolonne (5) zugleich den Kondensator der Verstärkungskolonne (19) bildet,
**dadurch gekennzeichnet, dass**
der Rektifikationskolonne (33) eine Molekularsiebanordnung (43) zur Dehydrierung des rektifizierten Alkohols nachgeschaltet ist.

2. Anlage nach Anspruch 1, **dadurch gekennzeichnet, dass** die Anlage so ausgebildet ist, dass die Destillationskolonne (5) den Rohalkohol bei einer Destillationstemperatur von weniger als 85°C abzieht und die Rektifikationskolonne (33) die Alkoholkonzentration des Rohalkohols auf etwa 94 Vol% erhöht.

3. Anlage nach Anspruch 1 oder 2, **dadurch gekennzeichnet, dass** die Anlage so ausgebildet ist, dass die Rektifikationskolonne (33) bei einem KopfÜberdruck von bis zu 6 bar betrieben ist und der rektifizierte Alkohol der Molekularsiebanordnung (43) in Dampfform zugeführt ist.

4. Anlage nach einem der Ansprüche 1 bis 3, **dadurch gekennzeichnet, dass** ein die Verstärkungskolonne (19) beheizender Reboiler (139) durch dehydrierten Alkohol der Molekularsiebanordnung (43) beheizt ist.

5. Anlage nach Anspruch 4, **dadurch gekennzeichnet, dass** die Molekularsiebanordnung (43) wenigstens zwei Molekularsiebe (101, 103, 105) aufweist, von denen in zyklischer Vertauschung wenigstens eines (101) im Trocknungsmodus den rektifizierten Alkohol aufnimmt und den dehydrierten Alkohol über den Reboiler (139) der Verstärkungskolonne (19) abgibt und von denen wenigstens ein zweites (103, 105) der Molekularsiebe im Regenerationsmodus einen Anteil des dehydrierten Alkohols aufnimmt und den im Regenerationsmodus befeuchteten Alkohol über einen Kondensator (109) und einen mit Frischdampf beheizten Verdampfer (125), insbesondere Fallfilmverdampfer der Rektifikationskolonne (33) als zu rektifiziernder Zulauf zuführt.

6. Anlage nach Anspruch 4 oder 5, **dadurch gekennzeichnet, dass** ein die Verstärkungskolonne (19) beheizender weiterer Reboiler (77) durch Kopfbrüden der Rektifikationskolonne (33) beheizt ist.

7. Anlage nach einem der Ansprüche 4 bis 6, **dadurch gekennzeichnet, dass** ein die Rektifikationskolonne (33) beheizender Reboiler (79) durch Frischdampf beheizt ist.

8. Anlage nach einem der Ansprüche 4 bis 7, **dadurch gekennzeichnet, dass** der Reboiler (77) der Verstärkungskolonne (19) oder/und der Reboiler (79) der Rektifikationskolonne (33) als in einen Zwangsumlaufkreis (35, 83) angeordnete Verdampfer, insbesondere Fallfilmverdampfer ausgebildet sind.

9. Anlage nach Anspruch 8, **dadurch gekennzeichnet, dass** der Zwangsumlaufkreis (35) des Reboilers (77) der Verstärkungskolonne (19) durch deren Fußbereich (39) geführt ist und der Alkoholzufluss der Rektifikationskolonne (33) aus diesem Zwangsumlaufkreis (35) abgezweigt ist.

10. Anlage nach Anspruch 8 oder 9, **dadurch gekennzeichnet, dass** das Kondensat des Reboilers (27) der Destillationskolone (5) oder/und das Kondensat des Reboilers (77) der Verstärkungskolonne (19) als Rückfluss der Verstärkungskolonne (19) oder/und der Rektifikationskolonne (33) zuführbar ist.

11. Anlage nach Anspruch 5 bis 10, **dadurch gekennzeichnet, dass** der dehydrierte Alkohol stromab des Reboilers (139) der Verstärkungskolonne (19) in einem Wärmetauscher (119) das kondensierte Alkohol-Wasser-Gemisch aus dem Kondensator (109) vorwärmt.

12. Anlage nach einem der Ansprüche 6 bis 11, **dadurch gekennzeichnet, dass** das Kondensat des durch Kopfbrüden der Rektifikationskolonne (33) beheizten Reboilers (77) der Verstärkungskolonne (19) als Rücklauf der Verstärkungskolonne (19) oder/und der Rektifikationskolonne (33) zuführbar ist.

13. Anlage nach einem der Ansprüche 1 bis 12, **dadurch gekennzeichnet, dass** der Destillationskolonne (5) ein durch Kopfbrüden der Verstärkungskolonne (19) beheizter Reboiler (27) zugeordnet ist und das Kondensat des Kopfbrüdens dieses Reboilers (27) der Verstärkungskolonne (19) oder/und der Rektifikationskolonne (33) als Rückfluss zuführbar ist.

14. Anlage nach einem der Ansprüche 1 bis 13, **dadurch gekennzeichnet, dass** in der Destillationskolonne (5) anfallende Schlempe einer die Schlempe in eine Feststofffraktion und eine Dünnsaftfraktion trennenden Trennvorrichtung (51) zuführbar ist,
dass der Destillationskolonne (5) zu deren Beheizung ein als Fallfilmverdampfer (27) ausgebildeter, durch Kopfbrüden einer im Produktstrom nachfolgenden, die Alkoholkonzentration erhöhende Kolonne (19) oder durch Frischdampf beheizter Reboiler zugeordnet ist und zumindest ein Teil der Dünnsaftfraktion in einem Zwangsumlaufkreis (47) durch den Fallfilmverdampfer (27) geführt ist und
dass zumindest ein Teil der in dem Zwangsumlaufkreis (47) umlaufenden Dünnsaftfraktion oder Brüden hiervon der Destillationskolonne (5) zu deren Beheizung zuführbar ist.

15. Anlage nach Anspruch 14, **dadurch gekennzeichnet, dass** der Fallfilmverdampfer (27) durch Kopfbrüden einer im Alkoholproduktstrom zwischen der Destillationskolonne (5) und der Rektifikationskolonne (33) angeordneten, die Alkoholkonzentration des Rohalkohols erhöhenden Verstärkungskolonne (19) beheizt ist.

16. Anlage nach einem der Ansprüche 1 bis 15, **dadurch gekennzeichnet, dass**
Rohalkoholbrüden der Destillationskolonne (5) in einem zur Erzeugung von Wasserdampf genutzten Verdampfer (55) zumindest zu einem Teil kondensierbar ist und der Wasserdampf über einen den Druck oder/und die Temperatur des Wasserdampfs erhöhenden mechanischen Verdichter (59) der Destillationskolonne (5) oder einer weiteren aus der fermentierten Maische Rohalkohol abziehenden Destillationskolonne zu deren Beheizung zuführbar ist.

17. Anlage nach Anspruch 16, **dadurch gekennzeichnet, dass**
der Verdampfer (55) als Fallfilmverdampfer ausgebildet ist.

18. Anlage nach Anspruch 17, **dadurch gekennzeichnet, dass** der Fallfilmverdampfer für die Erzeugung des Wasserdampfs in einem Zirkulationskreis (63) für Frischwasser oder Schlempe oder Schlempebrüden angeordnet ist.

19. Anlage nach Anspruch 18, **dadurch gekennzeichnet, dass**
der mechanische Verdichter (59) über einen den Wasserdampf abtrennenden Abscheider (57) an den Zirkulationskreis (63) angeschlossen ist.

20. Anlage nach einem der Ansprüche 16 bis 19, **dadurch gekennzeichnet, dass** der mechanische Verdichter (59) mehrere seriell verbundene mechanische Verdichterstufen umfasst.

21. Anlage nach Anspruch 16 bis 20, **dadurch gekennzeichnet, dass**
die Destillationskolonne (5) mittels eines durch Kopfbrüden einer nachfolgenden die Alkoholkonzentration erhöhenden Kolonne, insbesondere einer im Produktstrom zwischen der Destillationskolonne (5) und der Rektifikationskolonne (33) angeordneten Verstärkungskolonne (19) beheizten Reboilers (27) und zusätzlich mittels des verdichteten Wasserdampfs des mechanischen Verdichters (59) beheizt ist.

## Claims

1. System for distilling alcohol, in particular ethyl alcohol from fermented mash, comprising at least one distillation column (5) which draws off raw alcohol from the fermented mash and has a reboiler (27), and a rectification column (33) which is connected downstream from the distillation column (5) and increases the alcohol concentration, an intensifying column (19) which concentrates the raw alcohol of the distillation column being connected downstream of the at least one distillation column (5), the top vapour condensate of which intensifying column can be supplied to the rectification column (33) as a top-side return flow, and from the foot region (39) of which intensifying column an alcohol-water mixture can be supplied to the rectification column (33) as a flow to be concentrated, the top vapour from the intensifying column (19) being used to heat the distillation column (5), the reboiler (27) of the distillation column (5), which reboiler is heated by means of the top vapour, simultaneously forming the condenser of the intensifying column (19), **characterised in that** a molecular sieve assembly (43) for dehydrogenating the rectified alcohol is connected downstream of the rectification column (33).

2. System according to claim 1, **characterised in that** the system is designed such that the distillation column (5) draws off the raw alcohol at a distillation temperature of less than 85°C, and the rectification column (33) increases the alcohol concentration of the raw alcohol to approximately 94 vol.%.

3. System according to either claim 1 or claim 2, **characterised in that** the system is designed such that the rectification column (33) is operated at a head overpressure of up to 6 bar, and the rectified alcohol is supplied to the molecular sieve assembly (43) in vapour form.

4. System according to any of claims 1 to 3, **characterised in that** a reboiler (139) which heats the intensifying column (19) is heated by dehydrogenated alcohol from the molecular sieve assembly (43).

5. System according to claim 4, **characterised in that** the molecular sieve assembly (43) comprises at least two molecular sieves (101, 103, 105), of which, in cyclic permutation, at least one (101) receives the rectified alcohol in the drying mode and outputs the dehydrogenated alcohol by means of the reboiler (139) of the intensifying column (19), and of which at least a second (103, 105) of the molecular sieves receives a portion of the dehydrogenated alcohol in the regeneration mode and, by means of a condenser (109) and an evaporator (125), in particular a falling film evaporator, heated by means of live steam, supplies alcohol which has been moistened in the regeneration mode to the rectification column (33) as a flow to be rectified.

6. System according to either claim 4 or claim 5, **characterised in that** a further reboiler (77) which heats the intensifying column (19) is heated by top vapour from the rectification column (33).

7. System according to any of claims 4 to 6, **characterised in that** a reboiler (79) which heats the rectification column (33) is heated by live steam.

8. System according to any of claims 4 to 7, **characterised in that** the reboiler (77) of the intensifying column (19) and/or the reboiler (79) of the rectification column (33) are formed as an evaporator, in particular a falling film evaporator, arranged in a forced circulation circuit (35, 83).

9. System according to claim 8, **characterised in that** the forced circulation circuit (35) of the reboiler (77) of the intensifying column (19) is guided through the foot region (39) thereof, and the alcohol flow to the rectification column (33) is branched off from this forced circulation circuit (35).

10. System according to either claim 8 or claim 9, **characterised in that** the condensate of the reboiler (27) of the distillation column (5) and/or the condensate of the reboiler (77) of the rectification column (19) can be supplied to the intensifying column (19) and/or the rectification column (33) as reflux.

11. System according to claims 5 to 10, **characterised in that** the dehydrogenated alcohol downstream of the reboiler (139) of the intensifying column (19) preheats the condensed alcohol-water mixture from the condenser (109) in a heat exchanger (119).

12. System according to any of claims 6 to 11, **characterised in that** the condensate of the reboiler (77) of the intensifying column (19), which reboiler is heated by the top vapour of the rectification column (33), can be supplied to the intensifying column (19) and/or the rectification column (33) as a return flow.

13. System according to any of claims 1 to 12, **characterised in that** a reboiler (27) heated by the top vapour of the intensifying column (19) is associated with the distillation column (5), and the condensate of the top vapour of this reboiler (27) can be supplied to the intensifying column (19) and/or the rectification column (33) as reflux.

14. System according to any of claims 1 to 13, **characterised in that** spent wash which accumulates in the distillation column (5) can be supplied to a separating device (51) which separates the spent wash into a solid fraction and a thin juice fraction, **in that** a reboiler which is formed as a falling film evaporator (27) and is heated by live steam or by top vapour from a column (19) which increases the alcohol concentration and is downstream in the product stream is associated with the distillation column (5) for the heating thereof, and at least part of the thin juice fraction is guided in a forced circulation circuit (47) through the falling film evaporator (27), and **in that** at least part of the thin juice fraction circulating in the forced circulation circuit (47) or vapours thereof can be supplied to the distillation column (5) for the heating thereof.

15. System according to claim 14, **characterised in that** the falling film evaporator (27) is heated by the top vapour of an intensifying column (19) which is arranged in the alcohol product stream between the distillation column (5) and the rectification column (33) and increases the alcohol concentration of the raw alcohol.

16. System according to any of claims 1 to 15, **characterised in that** raw alcohol vapour of the distillation column (5) can be at least partially condensed in an evaporator (55) used for generating steam, and the steam can be supplied, by means of a mechanical compressor (59) which increases the pressure and/or the temperature of the steam, to the distillation column (5) or to another distillation column, which draws off raw alcohol from the fermented mash, for the heating thereof.

17. System according to claim 16, **characterised in that** the evaporator (55) is designed as a falling film evaporator.

18. System according to claim 17, **characterised in that** the falling film evaporator for generating steam is arranged in a circulation circuit (63) for fresh water, spent wash or spent-wash vapours.

19. System according to claim 18, **characterised in that** the mechanical compressor (59) is connected to the circulation circuit (63) by means of a separator (57) which separates the steam.

20. System according to any of claims 16 to 19, **characterised in that** the mechanical compressor (59) comprises a plurality of mechanical compressor stages connected in series.

21. System according to claims 16 to 20, **characterised in that** the distillation column (5) is heated by means of a reboiler (27) which is heated by means of the top vapour of a column connected downstream which increases alcohol concentration, in particular an intensifying column (19) arranged in the product stream between the distillation column (5) and the rectification column (33), and the distillation column is additionally heated by means of the compressed steam of the mechanical compressor (59).

## Revendications

1. Installation pour la distillation d'alcool, plus particulièrement d'alcool éthylique à partir d'un moût fermenté, comprenant
au moins une colonne de distillation (5) extrayant de l'alcool brut du moût fermenté, avec un rebouilleur (27) et une colonne de rectification (33) augmentant la concentration en alcool, disposée en aval de la colonne de distillation (5),
moyennant quoi, en aval de l'au moins une colonne de distillation (5), est disposée une colonne de concentration (19), concentrant l'alcool brut de la colonne de distillation, dont le condensat de vapeur de tête peut être introduit dans la colonne de rectification (33) en tant que retour de tête et, à partir de sa zone de pied (39), un mélange alcool-eau peut être introduit dans la colonne de rectification (33) en tant qu'afflux à concentrer,
la vapeur de tête de la colonne de rectification (19) étant utilisée pour le chauffage de la colonne de distillation (5), le rebouilleur (27) de la colonne de distillation (5), chauffé par la vapeur de tête, constituant en même temps le condensateur de la colonne de concentration (19),
**caractérisée en ce que**
en aval de la colonne de rectification (33) est disposé un dispositif à tamis moléculaire (43) pour la déshydratation de l'alcool rectifié.

2. Installation selon la revendication 1, **caractérisée en ce que** l'installation est conçue de façon à ce que la colonne de distillation (5) extrait l'alcool brut à une température de distillation inférieure à 85 °C et la colonne de rectification (33) augmente la teneur en alcool de l'alcool brut à environ 94 % en volume.

3. Installation selon la revendication 1 ou 2, **caractérisée en ce que** l'installation est conçue de façon à ce que la colonne de rectification (33) fonctionne à une surpression de tête jusqu'à 6 bar et l'alcool rectifié est introduit dans le dispositif à tamis moléculaire (43) sous forme de vapeur.

4. Installation selon l'une des revendications 1 à 3, **caractérisée en ce que** un rebouilleur (139) chauffant la colonne de concentration (19) est chauffé par l'alcool déshydraté du dispositif à tamis moléculaire (43).

5. Installation selon la revendication 4, **caractérisée en ce que** le dispositif à tamis moléculaire (43) comprend au moins deux tamis moléculaires (101, 103, 105), dont au moins un (101) absorbe, en mode séchage, l'alcool rectifié par permutation cyclique et produit l'alcool déshydraté par l'intermédiaire du rebouilleur (139) de la colonne de concentration (19), et dont au moins un deuxième (103, 105) des tamis moléculaires absorbe, en mode régénération, une partie de l'alcool déshydraté, et introduit l'alcool humidifié en mode régénération, par l'intermédiaire d'un condensateur (109) et d'un évaporateur (125) chauffé avec de la vapeur fraîche, plus particulièrement un évaporateur à film tombant de la colonne de rectification (33), en tant qu'afflux à rectifier.

6. Installation selon la revendication 4 ou 5, **caractérisé en ce qu'**un autre rebouilleur (77) chauffant la colonne de concentration (19) est chauffé par les vapeurs de tête de la colonne de rectification (33).

7. Installation selon l'une des revendications 4 à 6, **caractérisée en ce qu'**un rebouilleur (79) chauffant la colonne de rectification (33) est chauffé par une vapeur fraîche.

8. Installation selon l'une des revendications 4 à 7, **caractérisée en ce que** le rebouilleur (77) de la colonne de concentration (19) et/ou le rebouilleur (79) de la colonne de rectification (33) sont conçus comme des évaporateurs, plus particulièrement des évaporateurs à films tombants disposés dans un circuit à circulation forcée (35, 83).

9. Installation selon la revendication 8, **caractérisée en ce que** le circuit à circulation forcée (35) du rebouilleur (77) de la colonne de concentration (19) est guidé par sa zone de pied (39) et l'afflux d'alcool de la colonne de rectification (33) est dévié de ce circuit à circulation forcée (35).

10. Installation selon la revendication 8 ou 9, **caractérisée en ce que** le condensat du rebouilleur (27) de la colonne de distillation (5) et/ou le condensat du rebouilleur (77) de la colonne de concentration (19) peuvent être introduits en tant que retours dans la colonne de concentration (19) et/ou de la colonne de rectification (33).

11. Installation selon la revendication 5 à 10, **caractérisée en ce que** l'alcool déshydraté préchauffe, en aval du rebouilleur (139) de la colonne de concentration (19), dans un échangeur thermique (119), le mélange alcool-eau condensé provenant du condensateur (109).

12. Installation selon l'une des revendications 6 à 11, **caractérisée en ce que** le condensat du rebouilleur (77), chauffé par les vapeurs de tête de la colonne de rectification (33), de la colonne de concentration (19) peut être introduit en tant que retour dans la colonne de concentration (19) et/ou dans la colonne de rectification (33) .

13. Installation selon l'une des revendications 1 à 12, **caractérisée en ce que**, à la colonne de distillation (5) correspond un rebouilleur (27), chauffé par les vapeurs de tête de la colonne de concentration (19), et le condensat des vapeurs de tête de ce rebouilleur (27) peut être introduit en tant que retour dans la colonne de concentration (19) et/ou dans la colonne de rectification (33).

14. Installation selon l'une des revendications 1 à 13, **caractérisée en ce que** la vinasse apparaissant dans la colonne de distillation (5) peut être introduite dans un dispositif de séparation (51) séparant la vinasse en une fraction solide et une fraction de jus dilué,
**en ce que**, à la colonne de distillation (5), pour son chauffage, correspond un rebouilleur conçu comme un évaporateur à film tombant (27), chauffé par les vapeurs de tête d'une colonne (19) disposée en aval dans le flux de produit, augmentant la teneur en alcool, ou par de la vapeur fraîche et au moins une partie de la fraction de jus dilué est guidée dans un circuit à circulation forcée (47) à travers l'évaporateur à film tombant (27) et
**en ce qu'**au moins une partie de la fraction de jus dilué circulant dans le circuit à circulation forcée (47) ou des vapeurs de celle-ci peuvent être introduites dans la colonne de distillation (5) pour son chauffage.

15. Installation selon la revendication 14, **caractérisée en ce que** l'évaporateur à film tombant (27) est chauffé par des vapeurs de tête d'une colonne de concentration (19) disposée, dans le flux de produit alcoolique, entre la colonne de distillation (5) et la colonne de rectification (33), augmentant la teneur en alcool de l'alcool brut.

16. Installation selon l'une des revendications 1 à 15, **caractérisée en ce que**
les vapeurs d'alcool brut de la colonne de distillation (5) peuvent être condensées au moins en partie dans un évaporateur (55) utilisé pour la production de vapeur d'eau et la vapeur d'eau peut être introduite, par l'intermédiaire d'un compresseur mécanique (59), augmentant la pression et/ou la température de la vapeur d'eau, dans la colonne de distillation (5), ou dans une autre colonne de distillation extrayant de l'alcool brut à partir du moût fermenté, pour son chauffage.

17. Installation selon la revendication 16, **caractérisée en ce que** l'évaporateur (55) est conçu comme un évaporateur à film tombant.

18. Installation selon la revendication 17, **caractérisée en ce que** l'évaporateur à film tombant est disposé, pour la production de la vapeur d'eau, dans un circuit de circulation (63) pour de l'eau fraîche ou de la vinasse ou des vapeurs de vinasse.

19. Installation selon la revendication 18, **caractérisée en ce que** le compresseur mécanique (59) est raccordé au circuit de circulation (63) par l'intermédiaire d'un séparateur (57) séparant la vapeur d'eau.

20. Installation selon l'une des revendications 16 à 19, **caractérisée en ce que** le compresseur mécanique (59) comprend plusieurs étages de compression mécanique reliés en série.

21. Installation selon l'une des revendications 16 à 20, **caractérisée en ce que** la colonne de distillation (5) est chauffée au moyen d'un rebouilleur (27) chauffé par les vapeurs de tête d'une colonne suivante augmentant la teneur en alcool, plus particulièrement une colonne de concentration (19) disposée, dans le flux du produit, entre la colonne de distillation (5) et la colonne de rectification (33), et en outre au moyen de la vapeur d'eau comprimée du compresseur mécanique (59).
